# EUROPÄISCHE PATENTSCHRIFT

(11) **EP 1 621 779 B1**
(45) Veröffentlichungstag und Bekanntmachung des Hinweises auf die Patenterteilung: **31.12.2014**
(21) Anmeldenummer: 05012181.3
(22) Anmeldetag: 07.06.2005
(51) Int. Cl.: F15B 15/14, F16J 15/46

(54) **Hydraulischer Linearantrieb, insbesondere hydraulischer Getriebeaktuator**
Hydraulic linear drive, especially hydraulic transmission actuator
Entraînement linéaire hydraulique, en particulier actionneur hydraulique de transmission

(30) Priorität: 30.07.2004 DE 102004037116
(43) Veröffentlichungstag der Anmeldung: 01.02.2006
(73) Patentinhaber: Dr. Ing. h.c. F. Porsche AG, 70435 Stuttgart (DE)
(72) Erfinder: Nassif, Serge, 67450 Mundolsheim (FR)

(56) Entgegenhaltungen:
- GB-A- 301 066
- US-A- 3 514 113
- US-A- 4 890 849

## Beschreibung

Die Erfindung betrifft einen hydraulischen Linearantrieb, insbesondere einen hydraulischen Getriebeaktuator nach den Merkmalen des Oberbegriffs des Patentanspruchs 1.

In der US 3,514,113 A ist ein Dichtungselement für einen Kolben beschrieben, das aus einem ringförmigen elastischen Material gebildet ist und den Kolben bzw. eine Kolbenstange umfasst, wobei zur Erhöhung der Dichtwirkung die Außenseite nutförmig ausgestaltet ist und mit Hydrauliköl beaufschlagt wird. Zur Erhöhung des Hydrauliköldruckes wird die Hydrauliköioberfläche mit einem gasförmigen Medium beaufschlagt, der durch die axiale Verschiebung der Kolbenstange herbeigeführt wird.

Hydraulische Linearantriebe werden beispielsweise bei automatisierten Schaltgetrieben für die Synchronisierung der Getriebegänge eingesetzt (siehe beispielsweise Johannes Loomann, Zahnradgetriebe, 2. Auflage, Seite 156 ff.).

Bei den gattungsgemäßen hydraulischen Linearantrieben wird der von zwei Druckräumen begrenzte Doppelkolben durch eine entsprechende Druckbeaufschlagung jeweils nach links oder rechts verschoben, wobei in vielen Anwendungsfällen eine Abdichtung der beiden Druckräume durch am Außenumfang des Kolbens angeordnete Dichtungselemente erfolgt.

Insbesondere bei hydraulischen Getriebeaktuatoren werden bei der Synchronisierung der Getriebezahnräder hohe Stellkräfte aufgebracht, die eine zuverlässige und dauerhafte Abdichtung bzw. Trennung der beiden Druckräume erfordern.

Aufgabe der Erfindung ist es daher, die Abdichtung der beiden Druckräume im Bereich der Kolben/Zylindereinheit zu verbessern. Die Aufgabe wird durch die im Anspruch 1 angegebenen Merkmale gelöst.

Durch eine Druckbeaufschlagung des in einer umlaufenden Nut des Zylindergehäuses aufgenommenen Dichtringes wird auf diesen zusätzlich eine Dichtkraft ausgeübt, die eine zuverlässige Abdichtung der beiden vom Stellkolben getrennten Druckräume gewährleistet.

Durch die in den Unteransprüchen angegebenen Merkmale sind weitere vorteilhafte Ausgestaltungen und Weiterbildungen des hydraulischen Linearantriebs möglich.

Eine besonders wirksame Abdichtung ergibt sich, wenn der Dichtring auf seiner Außenseite eine im Querschnitt V-förmige Nut aufweist, während sich der Querschnitt auf der Innenseite in Richtung des Stellkolbens verjüngt. Damit wird der Anpressdruck des Dichtringes gegen den Stellkolben aufgrund der erzeugten Linienpressung erhöht.

Zur Beaufschlagung des Dichtringes mit Hydrauliköl während der Verstellung des Kolbens wird auf vorteilhafte Art und Weise der Differenzdruck zwischen beiden Druckräumen abgenommen und über eine Druckwaage dem Dichtring auf seiner Außenseite zugeführt.

Alternativ zu der zuvor beschriebenen permanenten Hydraulikölzufuhr kann mit Hilfe eines Schaltventils die Druckzufuhr zum Dichtring steuerbar ausgestaltet werden. Der Vorteil der beliebig aktivier- bzw. deaktivierbaren zusätzlichen hydraulischen Abdichtung besteht darin, dass beispielsweise beim Einsatz des hydraulischen Linearantriebs als hydraulischer Getriebeaktuator der Dichtring nur während der Synchronisierungsphase, bei der höhere Stellkräfte aufgebracht werden müssen, mit Drucköl beaufschlagt wird.

Zwei Ausführungsbeispiele der Erfindung sind in der Zeichnung dargestellt und werden im nachfolgenden näher beschrieben.

Es zeigen:
- Fig. 1: einen Linearantrieb mit einer hydraulischen Ansteuerung nach einem ersten Ausführungsbeispiel und
- Fig. 2: einen Linearantrieb mit einer hydraulischen Ansteuerung nach einem zweiten Ausführungsbeispiel.

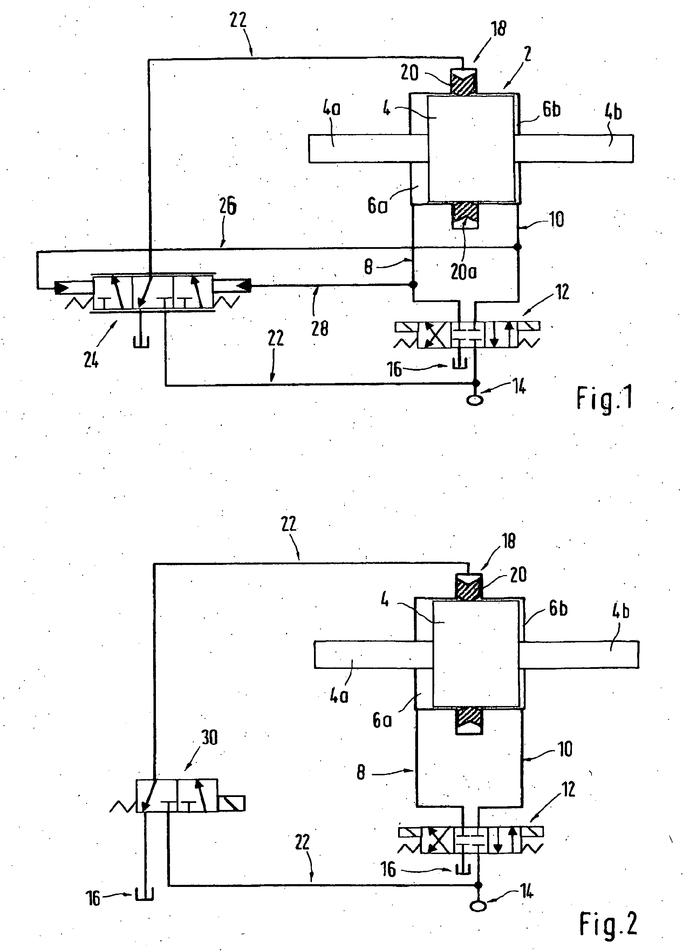

Der in Fig. 1 dargestellte hydraulische Linearantrieb, der beispielsweise als hydraulischer Getriebeaktuator für ein automatisiertes Schaltgetriebe einsetzbar ist, weist ein Zylindergehäuse 2 auf, in dem ein Stellkolben 4 mit einer nach links und rechts aus dem Zylindergehäuse 2 herausgeführten Kolbenstange 4a und 4b aufgenommen ist. Der Stellkolben 4 unterteilt den Zylinderraum in zwei Druckräume 6a und 6b, an die jeweils eine entsprechende Hydraulikleitung 8 und 10 angeschlossen ist. Die Hydraulikleitungen 8 und 10 führen zu einem elektrisch ansteuerbaren 4/3-Schaltventil, das eingangsseitig über Anschlüsse 14 und 16 mit einem Öltank und einer Druckquelle in Verbindung steht. Je nach Schaltstellung des Schaltventils 12 dienen die Hydraulikleitungen 8, 10 als Druckleitung bzw. als Rücklaufleitung in den Öltank.

Im Zylindergehäuse 2 ist eine konzentrisch zum Stellkolben ausgebildete Ringnut 18 eingebracht, in die ein Dichtring 20 eingelegt ist. Der Dichtring 20 dichtet mit seiner Innenseite gegenüber dem Stellkolben 4 ab, während seine Außenseite über eine Druckleitung 22 mit Hydrauliköl beaufschlagbar ist. In die Druckleitung 22 ist eine so genannte Druckwaage 24 eingebunden, die über zwei Steuerleitungen 26 und 28 mit der Hydraulikleitung 10 bzw. 8 verbunden ist.

Der Dichtring 20 weist auf seiner Außenseite eine im Querschnitt V-förmige Nut 20a auf, während sich der Querschnitt auf der Innenseite in Richtung des Stellkolbens 4 verjüngt.

Die zusätzliche hydraulische Abdichtung des Dichtringes 20 gegenüber dem Stellkolben 4 erfolgt auf folgende Art und Weise: Wird beispielsweise zur Verstellung des Stellkolbens 4 nach rechts über die Hydraulikleitung 8 der Druckraum 6a mit Hydrauliköl gefüllt, so wird gleichzeitig die Druckwaage 24 über die Steuerleitung 28 mit Hydrauliköl beaufschlagt und das Ventilglied der Druckwaage 24 nach links verschoben, so dass über die Druckleitung 22 die Ringnut 18 ebenfalls mit Hydrauliköl gefüllt wird. Damit wird der Dichtring 20 über diese zusätzliche hydraulische Kraft mit seiner Innenseite gegen den Stellkolben 4 gedrückt, so dass eine zuverlässige und sichere Abdichtung beider Druckräume 6a, 6b während der Verstellung des Stellkolbens 4 gewährleistet ist.

Das zweite Ausführungsbeispiel gemäß Fig. 2, bei dem gleiche Bauteile mit gleichen Bezugszeichen versehen sind, unterscheidet sich dadurch, dass anstelle der Druckwaage 24 ein Schaltventil 30 in der Druckleitung 22 integriert ist. Damit kann gegenüber dem ersten Ausführungsbeispiel die Druckbeaufschlagung des Dichtringes 20 beliebig aktiviert bzw. deaktiviert werden. Beispielsweise ist eine erhöhte Abdichtkraft dann erforderlich, wenn der als hydraulischer Getriebeaktuator verwendete Linearantrieb in der Synchronisierungsphase erhöhten Stellkräften ausgesetzt ist; in dieser Phase erfolgt dann über die Ansteuerung des 3/2-Schaltventils 30 eine entsprechende Druckbeaufschlagung des Dichtringes 20, während davor und danach die Verstellbewegung des Stellkolbens 4 gegebenenfalls ohne eine zusätzliche hydraulische Dichtkraft erfolgt.

## Patentansprüche

1. Hydraulischer Linearantrieb, insbesondere hydraulischer Getriebeaktuator, mit einer Kolben/Zylindereinheit, bei der ein im Zylindergehäuse (2) längsverschieblich angeordneter Stellkolben (4) vorgesehen ist, sowie mit einem am Stellkolben (4) oder am Zylindergehäuse (2) angeordneten Dichtungselement, das als Dichtring (20) ausgebildet und in einer Ringnut (18) des Zylindergehäuses (2) aufgenommen ist, wobei der Dichtring (20) mit seiner Innenseite gegen den Stellkolben (4) abdichtet und über seine Außenseite mit Hydrauliköl beaufschlagbar ist,
**dadurch gekennzeichnet, dass**
der Stellkolben (4) den Zylinderraum in mindestens zwei Druckräume (6a, 6b) unterteilt, die über Hydraulikleitungen (8, 10) mit Hydrauliköl beaufschlagbar sind, und
durch das Dichtungselement (20) die beiden Druckräume (6a, 6b) voneinander abgedichtet sind, wobei
zur Druckbeaufschlagung des Dichtringes (20) der Differenzdruck zwischen beiden Druckräumen (6a, 6b) mit Hilfe einer Druckwaage (24) abgenommen wird.

2. Hydraulischer Linearantrieb nach Anspruch 1, **dadurch gekennzeichnet, dass** der Dichtring (20) auf seiner Außenseite eine im Querschnitt V-förmige Nut (20a) aufweist, während sich der Querschnitt auf der Innenseite des Dichtungsringes (20) in Richtung des Stellkolbens (4) verjüngt.

3. Hydraulischer Linearantrieb nach Anspruch 1 oder 2, **dadurch gekennzeichnet, dass** die Druckzufuhr zum Dichtring (20) über ein Schaltventil (30) steuerbar ist.

## Claims

1. Spray nozzle arrangement for cooling a piston of an internal combustion engine, with a sleeve body (6) which is accommodated in a bore (4) in the crankcase (2) of the internal combustion engine and in which an oil supply duct is formed, with a nozzle line (10) which is connected to the sleeve body (6) and the free end of which is directed onto the piston, and with an anti-twist device (12) for fixing the spray nozzle (8) in the correct position, there being provided on the spray nozzle (8) a securing element (12) which engages by means of a portion (12b) into a bore (14) provided in the crankcase (2), **characterized in that** the bore (4) in the crankcase (2) is connected to an oil feed groove (22) for the main bearings of the crankshaft, so that, via the oil feed groove (22), the lubricating oil serving for cooling the piston can be supplied to the piston via the ducts formed in the sleeve body (6) and in the nozzle line (10).

2. Spray nozzle arrangement according to Claim 1, **characterized in that** the securing element (12) is arranged between the sleeve body (6) and the nozzle line (10).

3. Spray nozzle arrangement according to Claim 1 or 2, **characterized in that**, at that end of the sleeve body (6) which is accommodated in the bore (4), an annular groove (16) is provided, in which a spring ring (18) is accommodated in order to detain the sleeve body (6) in the bore (4), the bore (4) having in the region of the spring ring (18) a portion (4a) with a larger bore diameter, so that the shoulder (20) of the stepped bore (4a) acts as a stop for the spring ring (18).

## Revendications

1. Agencement de buse d'injection pour refroidir un piston d'un moteur à combustion interne, comprenant un corps de buse (6) qui est logé dans un alésage (4) dans le carter de vilebrequin (2) du moteur à combustion interne et dans lequel est réalisé un canal d'alimentation en huile, une conduite de buse (10) connectée au corps de buse (6), dont l'extrémité libre est orientée vers le piston, ainsi qu'une fixation anti-rotation (12) pour la fixation en position correcte de la buse d'injection (8), un élément de fixation (12) étant prévu sur la buse d'injection (8), lequel vient en prise par une portion (12b) dans un alésage (14) prévu dans le carter de vilebrequin (2), **caractérisé en ce que**
l'alésage (4) est en liaison dans le carter de vilebrequin (2) avec une rainure d'alimentation en huile (22) pour les paliers principaux du vilebrequin, de sorte que l'huile de lubrification servant à refroidir le piston puisse être acheminée au piston par le biais de la rainure d'alimentation en huile (22) par le biais de canaux réalisés dans le corps de buse (6) et dans la conduite de buse (10).

2. Agencement de buse d'injection selon la revendication 1, **caractérisé en ce que** l'élément de fixation (12) est disposé entre le corps de buse (6) et la conduite de buse (10).

3. Agencement de buse d'injection selon la revendication 1 ou 2, **caractérisé en ce qu'**une rainure annulaire (16) est prévue au niveau de l'extrémité du corps de buse (6) reçue dans l'alésage (4), dans laquelle rainure annulaire est logée une bague élastique (18) pour bloquer le corps de buse (6) dans l'alésage (4), l'alésage (4) présentant dans la région de la bague élastique (18) une portion (4a) ayant un plus grand diamètre d'alésage, de sorte que l'épaulement (20) de l'alésage étagé (4a) agisse en tant que butée pour la bague élastique (18).
